# EUROPEAN PATENT APPLICATION

(11) **EP 0 752 576 A2**
(43) Date of publication of application: **08.01.1997**
(21) Application number: 96304745.1
(22) Date of filing: 27.06.1996
(51) Int. Cl.: G01G 13/24

(54) **Material feed apparatus**

(30) Priority: 01.07.1995 GB 9513438
(71) Applicant: Ward Bekker Systems Limited, Malvern, Worcestershire WR14 1AJ (GB)
(72) Inventor: Shail, Kenneth Victor, Malvern, Worcestershire (GB)
(74) Representative: Mosey, Stephen George

(57) **Abstract**

Material feed apparatus (Figure 1) comprising a dispersion device (16,17) to which material is supplied, in use, from material feed means (13) through an infeed hopper (12), the dispersion device having a plurality of feeders (11) arranged radially therearound and being actuated to transfer material thereto, the dispersion device forming one part of a variable capacitor, with the hopper and feeders forming the other part thereof, and there being control means responsive to a change in the capacitance of the variable capacitor to vary the supply of material to said dispersion device so as to keep constant the depth of material on the dispersion device.

## Description

This invention relates to material feed apparatus, and is particularly concerned with automatic combinatorial weighing machines.

In the application of automatic weighing machines, there is a well known technique of providing a required fill-weight by selecting combinations of randomly provided sub-weights.

Such machines are commonly constructed with a central feeding device (dispersion feeder), which has a multiplicity of linear vibratory feeders radiating from it. In use, each radial feeder receives product from the central feeding device and delivers it in turn to a weighing device. The sub-weights are then selected from the weighing devices as appropriate to provide the required combination weight. Each weighing device can receive product directly or indirectly from its associated radial feeder, the indirect receipt being, for example, by means of a collecting chamber.

The performance of the machine is influenced to a large extent by the depth of product which is delivered to the central feeding device by the user's supply device, which is typically an overhead conveyor belt, a vibratory feeder or a screw-feeder.

Conventionally the depth level of product on the central feeding device has been measured by one of two methods:
a) By the use of photo-detectors, where the level of the product either breaks a light beam or changes the magnitude of reflected light. This in turn sends a signal to the user's feeding/supply device either to start/stop it, or to modulate its speed of delivery of product. Although this method is advantageous in respect of its relatively low implementation cost, it has certain disadvantages. Firstly it detects over a small area. Secondly there is a need to move the detectors physically when different set-ups are required, and thirdly it suffers from the rigours of the food packaging environment in its reliability and ability to be cleaned.
b) By mounting the central feeding device in its entirety on a loadcell or similar weighing mechanism. The signal from the loadcell corresponds to the weight of the central feeding device plus the product resting on the device. It then ultimately controls the user's feeding/supply device either by stop/start or speed modulation. This method is advantageous in that it senses the total amount of product carried on the central feeding device, this being important to the overall performance of the machine. Additionally it enables the required level of product to be determined by electronic means without mechanism adjustment during set-up of the machine. However the method has various disadvantages. Firstly it is costly and complicated to implement. Secondly the feeding device may weight may tens of kilograms, whereas the change in product level may correspond to only a few hundred grammes. Finally, the central feeding device produces vibratory forces which interfere with the weight signal.

The present invention has as its object the provision of material feed apparatus in a convenient and effective form.

According to the invention there is provided material feed apparatus comprising a dispersion device, a material feed device for supplying material, in use, to said dispersion device, a plurality of feeders arranged radially around the dispersion device, the dispersion device being arranged to be actuated, in use, to feed material therefrom to the feeders, and forming part of a variable capacitor, and control means responsive to a change in the capacitance of said variable capacitor to vary the rate of supply of material to said dispersion device from said material feed device so as to tend to keep constant or substantailly constant the depth of material on the dispersion device.

Variation of the rate of supply of material includes not only varying the speed of the supply device, but also includes starting or stopping said device.

Preferably the dispersion device forms one plate of the variable capacitor, with at least the radially arranged feeders forming the other plate thereof. Desirably material is supplied, in use, to the dispersion device via an infeed hopper, which also forms part of said other plate of the variable capacitor.

The invention will now be described, by way of example, with reference to the accompanying drawings, in which:-
Figure 1 is a diagrammatic view through the centre of an automatic weighing machine incorporating material feed apparatus of the invention, and
Figure 2 is an electrical circuit diagram for control means of the invention.

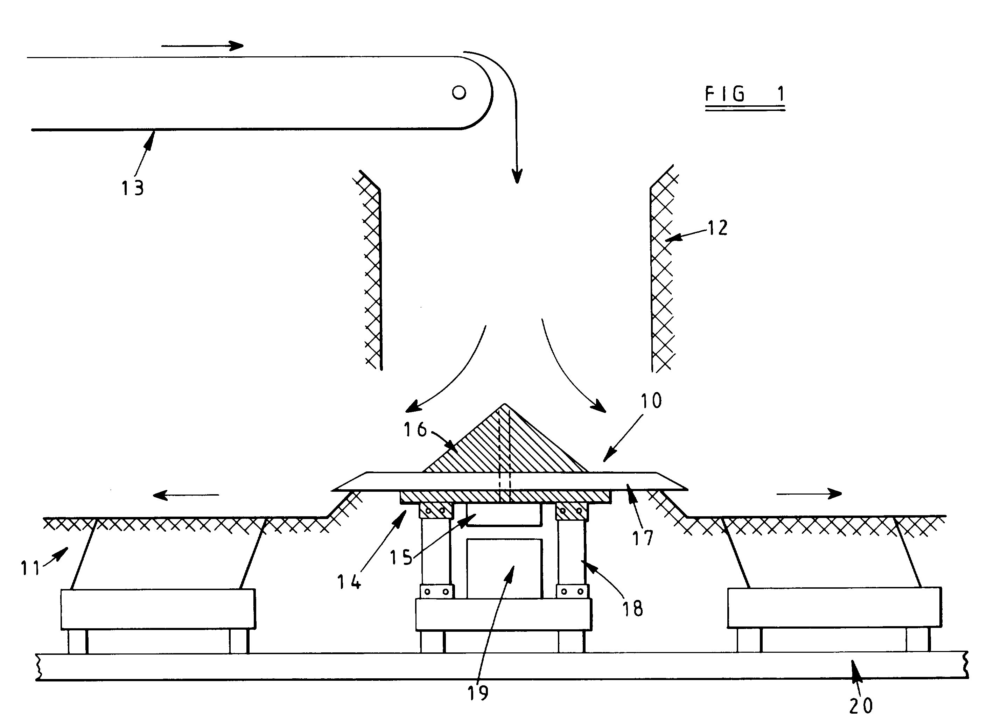

Figure 1 shows an embodiment of a material feed apparatus of the present invention, incorporated into an automatic combinatorial weighing machine. The weighing machine illustrated comprises a central dispersion member 10, with a plurality of feeders 11 radially arranged around the outer periphery of the dispersion member 10 so as, in use, to receive material from the dispersion member 10 as it is vibrated, as will be described. Material is fed to the central dispersion member 10 through an infeed hopper 12 disposed directly above the dispersion member, with material being fed into the hopper by a conveyor 13 which has one of its ends disposed above the top of the hopper so that product can fall off this end of the conveyor and through the hopper onto the dispersion member. Combinatorial weighing machines of this type are well known. However as already mentioned, the methods used to detect the depth of material product which is delivered to the central dispersion member from the user's supply device suffer from various disadvantages and accordingly an improved method will be disclosed herein.

As shown in Figure 1, the central dispersion member 10 has a central, circular metal disc 14. Centrally carried by the disc at its lower side is an armature 15, whilst on its upper side the disc 14 carries a central, conically shaped dispersion table 16, which is also metallic. Both the armature and the dispersion table can be attached to the disc 14 in any suitable manner, for example by way of a central bolt. Sandwiched between the dispersion table and the disc 14 is a disc 17 of plastics material, for example polyethylene. The disc 17 is circular in plan, having an outwardly and downwardly sloping frusto-conical peripheral edge surface. The disc 17 has a radius greater than that of the disc 14 so as to extend beyond the periphery of disc 14 for distribution of material from the disc 17 to the feeders 11 as will be described.

The disc 14 is vibratory, and to this end is mounted on fibreglass springs 18, which in use, resonant mechanically with the mass of the central disc assembly at or near the drive frequency of the vibrator. Mounted on a lower body part of the central disc assembly is an electromagnet 19, this being spaced slightly below, and aligned with the armature 15, so that in operation, in use, the armature, which is a simple bar of soft iron, is attracted to the electromagnet at the mechanical resonant frequency of the mass/spring arrangement.

The fibreglass springs are mounted at an angle to the vertical, such that the vertical component of force produced by the electromagnet is resolved into a circular force of the central disc and conical dispersion table. The resultant circular vibration causes material/product to spiral outwardly from the disc 17 so that it is distributed as equally as possible to the feeders 11. The centre feeding construction operates in a very similar manner to a conventional bowl-feeders in its spiral action and construction. Other feeding devices, such as a motor-driven rotating disc, could be used to disperse the product, so that a vibratory action is not essential.

Each radial feeder 11 can be a conventional linear vibratory feeder. For example each feeder can be in the form of a metal trough along which the product is conveyed, in use. Any number of radial feeders from 2 upwardly can be used, depending on the required speed and throughput of the weighing machine. Typically there would be between 8 and 24 feeders. In Figure 1 the feeders are diagrammatically shown with means for vibrating them, with such means being supported, like the central disc assembly, on a machine base 20, which in fact could merely be the ground.

The infeed hopper 12 shown in Figure 1 can be simply a metallic tube which guides product down onto the central disc assembly, particularly the centre conical dispersion table 16 and plastics material disc 17. Such a hopper need not, however, be present with all machines. For the delivery of product to the hopper, the conveyor 13 shown in Figure 1 has been described. However any suitable alternative feed means, for example a vibratory feeder, or a screw feeder, such as an auger, could instead be provided to bring the product to the machine. Any user's supply device can thus generally be used.

In order to determine the depth of product which is delivered to the central disc assembly, the present invention adapts the structure described to form a variable capacitor with the capacitance varying in relation to the depth of product. Such an arrangement combines the advantages of both prior art measurement methods described in that it is relatively inexpensive and simple to implement, has the ability to sense the total product level, and can be electronically adjusted.

The central disc assembly forms one plate of the variable capacitor, the fibreglass springs conveniently acting as insulators for that plate. Additionally as the disc 17 is an insulator, it serves to reduce any stray capacitance of the system and ensures that the product has more effect. The parts of the central disc assembly which form one plate of the variable capacitor are shown hatched in Figure 1.

The other plate of the capacitor is, in this example, formed by the combination of the metallic infeed hopper 12 and all the metallic troughs of the radial feeders 11. Both the hopper and the troughs would have electrical connections to the machine base, so that they would be earthed. Parts of the structure forming this other plate variable capacitor are shown in Figure 1 with an outer shading.

The capacitance of the variable capacitor will be at a minimum when there is no product on the central disc assembly, and will rise as the depth of product thereon increases. The product which is being measured forms the dielectric of the capacitor. However the capacitance will rise irrespective of whether the material is conductive or dielectric, the relative dielectric constant (relative permittivity) being considerably in excess of unity.

The frequency of the current in the electromagnet is either adjusted to suit the mechanical frequency of the mass/spring arrangement, or the mechanical frequency is adjusted to suit that of the supply (e.g. 50 Hz). The armature is connected by a flexible cable to the capacitance measuring instrumentation, thus connecting the whole central disc assembly via the clamp bolt previously mentioned.

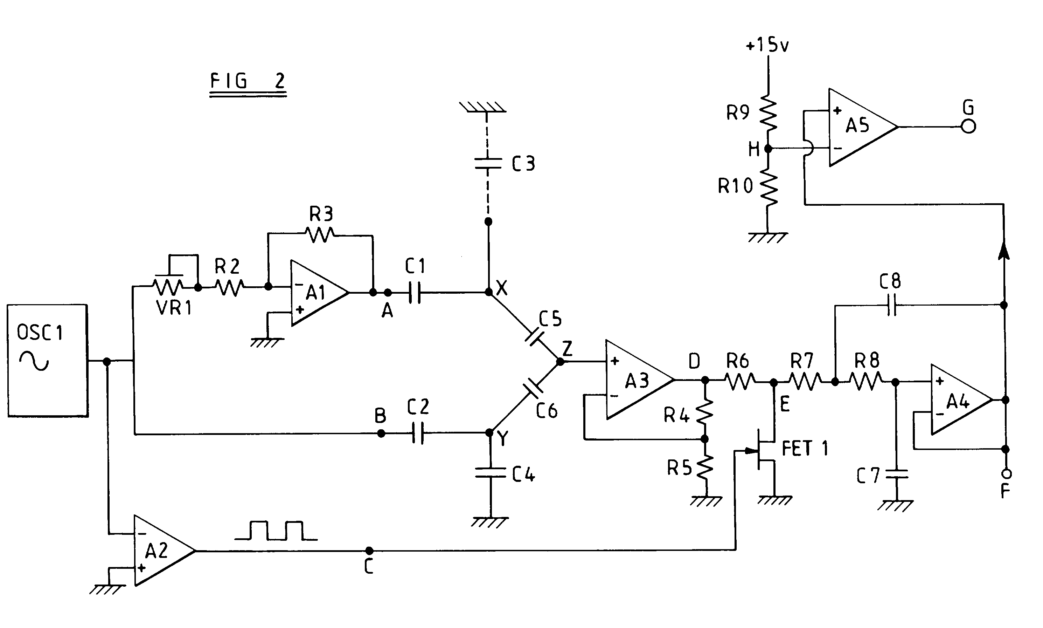

The capacitance measuring circuit will be described in relation to Figure 2 but, in summary, the capacitance of the variable capacitor is measured by an electrical bridge arrangement where the degree of unbalance of the bridge is proportional or approximately proportional to the level of product on the central disc assembly. This in turn produces linear or approximately linear signal which may be compared with one or more reference voltages by either hardware or software comparators. The result of that comparison can be used to stop/start the user's feeding device. Alternatively the proportionate voltage may be used to modulate the speed of the user's feeding device in response to the level of product which is on the central feeder.

One embodiment of a suitable capacitance measurement circuit will now be described in relation to Figure 2.

OSC1 is an oscillator which produces a sine wave at a frequency of approximately 10 Khz and amplitude of approximately 10 volts peak-to-peak. It can be a simple oscillator utilising a Wein Bridge network in the positive feedback path of an operational amplifier. Operational amplifier A1 forms an inverting amplifier with a gain of approximately -1. This gain may be adjusted by means of variable resistor VR1. Accordingly the signals at points A and B are therefore 180° out of phase and approximately equal in amplitude.

Capacitor C3 is the variable capacitor whose capacitance is being measured, this capacitor being formed by the components described and referred to in relation to Figure 1. Capacitor C4 is a fixed capacitor whose capacitance is selected to be approximately equal to that of C3 when the desired product depth is carried on the central disc assembly. Taken in conjunction with capacitors C1 and C2, capacitors C3 and C4 form a modified capacitance bridge, with the output terminals thereof being indicated as points X and Y. If the amplitude of the voltage at A exactly equals that at B, and the capacitance of C3 exactly equals that of C4, then the amplitude of the voltage at X will exactly equal that at Y with 180° phase difference.

The initial set-up attempts to make the value of C4 exactly equal to that of C3 for the required product depth. If this is not achieved exactly, for example due to preferred capacitor values, then VR1 is adjusted to compensate for the unbalance by supplying a slightly different bridge input voltage at A as compared with B.

The capacitors C5 and C6, both having very small capacitances, serve to sum the voltages at X and Y without substantially affecting the operation of the bridge. With the bridge in an exact state of balance, the voltage at Z is exactly zero because of the 180° phase difference.

When the capacitance of C3 varies with varying product depth, the bridge will be unbalanced. The amplitude of the voltage at X will then differ from that at Y, and, as a result, the voltage at Z will vary in response to the capacitance of C3. When C3 > C4 the amplitude of the voltage Z increases with increasing difference. Similarly when C4 > C3 the amplitude will also increase with increasing difference. This possible source of ambiguity is overcome as described.

The difference is that when C3 > C4, the voltage at Z will be in phase with the oscillator, but when C4 > C3, the voltage at Z will be out of phase (180° difference) with the oscillator. The voltage at point Z is fed to an operational amplifier A3 which has a very high input impedance so as not to load point Z. It is connected in the non-inverting mode with an amplification gain of approximately 100. The voltage at point D is therefore an amplified version of that at point Z.

Amplifier A2 is connected as a comparator. It compares the sine wave output voltage of OSC1 with zero and therefore produces a square wave which is at the same frequency as, but 180° out of phase with, the sine wave. This square wave (at point C) is known as the phase-reference signal and is fed to the gate of a Field Effect Transistor FET1. When the voltage at C is positive, FET1 is conducting, whereas when the voltage at point C is negative, FET1 is switched off.

FET1 and resistor R6 working together form a synchronous detector as follows. When the phase of the voltage at point D is in phase with the oscillator, the waveform at point E is a positive half-sine, having its negative half removed by FET1 conducting. When the phase of the voltage at point D is 180° out of phase with the oscillator, the waveform at point E is a negative half-sine, having its positive half removed by FET1 conducting. This synchronous detector therefore removes the above mentioned ambiguity that otherwise would be produced by using simple rectification/detection.

Amplifier A4 with capacitors C7 and C8, and resistors R7 and R8, forms a well known Sallen and Key low-pass, second order active filter. The capacitor and resistor values are chosen to give filtering of frequencies which are above, for example, 10 Hz. The half-wave signals at point E are therefore filtered out leaving only their D.C. components. In other words, the D.C. component is the average value of and is proportioned to the amplitude to the signal of point E. The D.C. output A4 is therefore proportional to the difference in the capacitances of C3 and C4 and therefore to the depth of product at the central disk assembly.

This D.C. output on point F therefore behaves as follows. When the capacitance of C3 is much lower than that of C4 (empty machine), the voltage has a (high) negative value. As the depth of product increases, the capacitance of C3 increases, causing the voltage to rise towards zero. At a particular product depth the capacitance of C3 will exactly equal that of C4 and the voltage will be zero. As the depth increases further and the capacitance of C3 becomes larger than that of C4, the voltage will climb to a (high) positive value. This D.C. signal is therefore available to the control system of the combination weighing machine to enable proportional control of the user's supply device as described.

In addition the D.C. voltage may be fed to an operational amplifier A5 which is connected as a comparator. When the D.C. voltage is less than that at point H, the output voltage at point G is negative. When the D.C. voltage is greater than that at point H, the comparator output is positive. The comparator output at point G is therefore a digital signal giving a high/low indication of the product depth and may be used to signal a control system in a simple start/stop digital fashion to cause the user's feeding equipment to start/stop or speed up/slow down, in response to product depth.

Accordingly this monitoring of the product depth enables the performance of the weighing machine to be improved. As with the prior art devices, product is fed from the radial feeders to respective associated weighing devices from which appropriate combinations of weights are chosen to provide a desired predetermined value of weight or a value as close as possible thereto.

The bridge circuit described is particularly suitable where an analogue output is required. However the capacitance of C3 could alternatively be measured by the capacitor being part of an electrical tuned circuit, the resonant frequency of which varies in response to the capacitance of C3.

As an electrical variable, frequency is nowadays more suited to digital and microprocessor techniques. The frequency value with no product present would be stored as a zero-product reference frequency.

Although as described, the value of C4 is selected to be equal to that of C3 for zero-product, this equality is not essential, and C3 and C4 may be slightly unbalanced to provide the largest dynamic range for use with Analogue to Digital convertors, the analogue output varying between -10 and +10 volts.

The capacitance can of course be measured by suitable means/methods other than those described and illustrated, and accordingly the invention is not limited to the capacitance measuring circuit(s) described/illustrated.

## Claims

1. Material feed apparatus comprising a dispersion device, a material feed device for supplying material, in use, to said dispersion device, a plurality of feeders arranged radially around the dispersion device, the dispersion device being arranged to be actuated, in use, to feed material therefrom to the feeders, and forming part of a variable capacitor, and control means responsive to a change in the capacitance of said variable capacitor to vary the supply of material to said dispersion device from said material feed device so as to tend to keep constant or substantially constant the depth of material on the dispersion device.

2. Material feed apparatus as claimed in claim 1, wherein the dispersion device forms one plate of the variable capacitor, with at least the radially arranged feeders forming the other plate thereof.

3. Material feed apparatus as claimed in claim 2, wherein material is supplied, in use, to the dispersion device via an infeed hopper, which also forms part of said other plate of the variable capacitor.

4. Material feed apparatus as claimed in claim 2 or claim 3, wherein the dispersion device is a metallic dispersion table carried on an insulating member.

5. Material feed apparatus as claimed in claim 4, wherein the insulating member has a metallic element at its underside, with fixing means extending through the insulating member to connect the dispersion table and the metallic element thereto.

6. Material feed apparatus as claimed in claim 5, wherein the metallic element carries an armature which is attracted, in use, to an electromagnet, the metallic element being mounted on resilient means and being vibratory to cause material to spiral outwardly, in use, from said insulating member to said feeders.

7. Material feed apparatus as claimed in claim 6, wherein the resilient means are of insulating material.

8. Material feed apparatus as claimed in claim 7, wherein the resilient means are fibreglass springs.

9. Material feed apparatus as claimed in claim 5, wherein the metallic element is non-vibratory in operation to cause dispersion of material from said insulating member, in use.

10. Material feed apparatus as claimed in any one of claims 2 to 9, wherein each feeder is in the form of a metallic trough.

11. Material feed apparatus as claimed in claim 10, wherein each feeder is a vibratory feeder.

12. Material feed apparatus as claimed in claim 10 or claim 11, wherein the troughs are earthed.

13. Material feed apparatus as claimed in claim 3, wherein the infeed hopper is earthed.

14. Material feed apparatus as claimed in any one of the preceding claims, wherein the capacitance of the variable capacitor is measured by an electrical bridge arrangement.

15. Material feed apparatus as claimed in claim 14, wherein the capacitance is at a minimum when, in use, there is no material on the dispersion device.

16. Material feed apparatus as claimed in claim 14 or claim 15, wherein the degree of unbalance of the bridge is proportional or substantially proportional to the depth of material on the dispersion device.

17. Material feed apparatus as claimed in claim 16, wherein unbalance of the bridge produces a linear or substantially linear signal which can be compared with one or more reference voltages to vary the rate of material feed.

18. Material feed apparatus as claimed in claim 17, wherein the material feed rate is varied by stopping/starting the material feed device.

19. Material feed apparatus as claimed in claim 17, wherein the material feed rate is varied by modulating the speed of the material feed device.

20. Material feed apparatus as claimed in any one of claims 1 to 13, wherein the variable capacitor is part of an electrical tuned circuit, the resonant frequency of which varies in response to the capacitance value of the variable capacitor.

21. Material feed apparatus as claimed in claim 20, wherein the frequency value of the tuned circuit with no material on the dispersion device is stored as a zero-product reference frequency.

22. A method of feeding material in which material is supplied by a material feed device to a dispersion device and thence to a plurality of feeders arranged radially around the dispersion device, the method comprising forming the dispersion device as part of a variable capacitor and operating control means responsible to a change in the capacitance of the variable capacitor to vary the supply of material to the dispersion device from the material feed device so as to tend to keep constant or substantially constant the depth of material on the dispersion device.
